# FASCICULE DE BREVET EUROPEEN

(11) **EP 3 193 157 B1**
(45) Date de publication et mention de la délivrance du brevet: **14.07.2021**
(21) Numéro de dépôt: 17150208.1
(22) Date de dépôt: 03.01.2017
(51) Int. Cl.: G01N 11/14, G01N 11/00

(54) **DISPOSITIF DE MESURE DE VISCOSITE SOUS ATMOSPHERE INERTE, MÈTHODE D'ANALYSE ET UTILISATION**
MESSVORRICHTUNG DER VISKOSITÄT UNTER SCHUTZATMOSPHÄRE, ANALYSEVERFAHREN UND VERWENDUNG
DEVICE FOR MEASURING VISCOSITY UNDER INERT ATMOSPHERE, ANALYSIS METHOD AND USE

(30) Priorité: 18.01.2016 FR 1650383
(43) Date de publication de la demande: 19.07.2017
(73) Titulaire: SPCM SA, 42160 Andrézieux-Bouthéon (FR)
(72) Inventeur: GIL, Ludwig, 42160 ANDREZIEUX BOUTHEON (FR); FAVERO, Cédrick, 42160 ANDREZIEUX BOUTHEON (FR); FRUCHART, Jean-Sébastien, 42160 ANDREZIEUX BOUTHEON (FR)
(74) Mandataire: Cabinet Laurent & Charras

(56) Documents cités:
- US-A- 3 680 362
- US-A- 4 630 468
- US-A- 5 587 522
- US-A1- 2005 087 002
- US-A1- 2008 127 718
- Anonymous: "VTE Electric Viscosel | Brookfield Engineering VTE Electric Viscosel", , 13 juillet 2015 (2015-07-13), pages 1-2, XP055375063, Extrait de l'Internet: URL:http://web.archive.org/web/20150713000 718/http://www.brookfieldengineering.com/p roducts/viscometers/process-vte-electric-v iscosel.asp [extrait le 2017-05-22]
- RENUKA N. MANICHAND ET AL: "Effective Propagation of HPAM Solutions Through the Tambaredjo Reservoir During a Polymer Flood", SPE PRODUCTION & OPERATIONS : AN OFFICIAL PUBLICATION OF THE SOCIETY OF PETROLEUM ENGINEERS, vol. 28, no. 04, 1 novembre 2013 (2013-11-01), pages 358-368, XP055305119, USA ISSN: 1930-1855, DOI: 10.2118/164121-PA

## Description

L'invention a pour objet un dispositif de mesure de viscosité sous atmosphère inerte de solutions, dont la viscosité n'est pas stable lors de mesures de viscosité en milieu aérobie.

### DOMAINE DE L'INVENTION

Plusieurs méthodes de production pétrolière peuvent être mises en œuvre selon les cas. Il s'agit principalement de :
- la production primaire relative à la production spontanée de pétrole par la pression interne du réservoir ;
- la production secondaire où la pression interne du réservoir est maintenue par injection d'eau ; et
- la production tertiaire constituée de diverses méthodes de récupération assistée.

La méthode appropriée est sélectionnée en fonction des investissements nécessaires (capex) et des coûts opérationnels (opex) qui sont eux-mêmes liés au type d'huile, au type de réservoir et à viscosité de l'huile.

Les nombreuses méthodes de récupération assistée de pétrole mises en œuvre dans un puits de pétrole présentent chacune leurs avantages. Parmi ces méthodes, on peut notamment citer :
- la réinjection du gaz produit ;
- l'injection de dioxyde de carbone qui a aussi pour but de fixer celui-ci pour éviter l'effet de serre ;
- l'injection de solvants divers ;
- le chauffage à la vapeur pour les huiles lourdes ;
- l'injection de bases pour les huiles acides ;
- l'injection de tensio-actifs ;
- des combustions in situ en injectant de l'oxygène ;
- des méthodes biologiques avec formation de bio surfactants ;
- des méthodes de diffusion par champs électrique...

L'une des méthodes parmi les plus simples et les plus efficaces consiste à injecter une solution aqueuse visqueuse.

La solution est rendue visqueuse par dissolution de polymères hydrosolubles, et en particulier de polyacrylamides, de gommes xanthane, et de manière plus anecdotique, des gomme guar ou d'éthers de cellulose.

Les polyacrylamides constituent les additifs préférés car ils présentent une meilleure résistance à la biodégradation que les gommes xanthane qui nécessitent notamment l'utilisation de fortes doses de bactéricides toxiques, et en particulier de formaldéhyde, pour être protégées de la biodégradation.

De manière générale, la méthode de production assistée de pétrole par injection de polymère consiste principalement à dissoudre le polyacrylamide, livré sous forme de poudre ou d'émulsion, à haute concentration par exemple de 5 à 20 g/L, dans de l'eau ou une saumure désoxygénée (pour éviter sa dégradation); et à injecter cette solution mère dans la tuyauterie d'injection d'eau ou de saumure et à injecter le mélange résultant dans le puits considéré.

L'objectif consiste notamment à maintenir une viscosité constante durant l'injection de la solution de polymère hydrosoluble, de manière à obtenir un balayage satisfaisant du réservoir.

Un des problèmes rencontrés, lors de l'utilisation de ces solutions aqueuses à base de polymères hydrosolubles est que les polymères peuvent être soumis à des dégradations chimiques. Ces dégradations chimiques sont dues tout d'abord à la formation de radicaux libres qui vont réagir avec la chaine principale du polymère et engendrer une chute de la masse molaire. Il en résulte une chute de viscosité de la solution liée à une diminution du volume hydrodynamique. Les radicaux libres peuvent provenir de différentes sources: ils peuvent être générés par le clivage de liaisons faibles de la chaine de polymères sous l'effet de chauffage/friction ou par les résidus d ' amorceurs ou des impuretés de sous-produits. Les systèmes red/ox sont également générateurs de radicaux libres. Ces derniers résultent par exemple du contact entre des polluants présents dans les eaux de production tels que l'H₂S ou de fer ferreux ou tout autre polluant présentant un potentiel réducteur et un oxydant tel que l'oxygène par exemple.

La présence d'oxygène est le facteur le plus néfaste, quant à la dégradation du polymère. La réaction de dégradation des polymères par l'oxygène est, de plus, amplifiée par la présence de métal tel que le fer ou par la présence de sulfure d'hydrogène. De telles dégradations peuvent donc intervenir dans la canalisation dans laquelle circule la solution de polymère hydrosoluble, dans le puits, mais également lors des prélèvements d'échantillons pour des buts divers, en particulier si ces derniers sont effectués à l'air libre où la quantité d'oxygène est bien plus importante que celle présente dans les canalisations ou le puits.

Par ailleurs, en plus des dégradations chimiques, le polymère peut être soumis dans le réservoir à des dégradations biologiques (bactéries,..) et mécaniques (à l'injection dans le puits), mais aussi à des perturbations dues à l'adsorption sur la roche du réservoir et à l'effet de dilution.

Il est donc important de pouvoir déterminer de manière précise le degré d'impact sur le polymère de chacune de ces étapes, afin d'optimiser l'injection de la solution viscosifiée. Cependant, lors de la prise d'échantillons de la solution aqueuse de polymère, il se produit le plus souvent un contact voulu ou non avec l'oxygène ce qui a pour conséquence de dégrader fortement la viscosité du polymère qui devient alors un paramètre inexploitable pour les analyses.

Dans ce contexte, il est important à différents stades du processus, par exemple en amont ou en aval de l'introduction dans la formation souterraine tels que les puits injecteur et producteur de pétrole, de pouvoir contrôler la qualité de la solution aqueuse de polymère hydrosoluble injectée, afin d'estimer les performances de l'injection au sein du puits, notamment. Pour cela, il est nécessaire de disposer de techniques de prélèvement permettant de conserver l'intégrité et les caractéristiques du polymère, ce qui n'est pas sans difficulté.

Le document « effective propagation of HPAM solutions through the tambaredjo reservoir during a polymer flood » de Manichand et col publié dans SPE Production & Opérations, Nov 2013, p 358-368, décrit un procédé de mesure de viscosité mettant en oeuvre un viscosimètre dont le porte échantillon est alimenté de façon continue par une solution de polymère en milieu complètement aérobie. Bien que ce système permette d'obtenir des mesures de viscosité satisfaisantes, ces dernières peuvent encore être améliorées.

Le document FR 2977630 décrit un procédé de prélèvement d'une solution aqueuse de polymère hydrosoluble circulant dans le circuit principal d'une installation de récupération assistée du pétrole On ajoute en pratique une solution stabilisante de manière discontinue, à la solution aqueuse de polymère hydrosoluble, avant ou après son prélèvement sur le circuit principal, de manière à obtenir un échantillon constitué d'un mélange de solution aqueuse de polymère hydrosoluble et de solution stabilisante. Du fait de la présence des stabilisants, le polymère hydrosoluble est protégé contre les attaques qu'il pourrait subir, en l'absence de solution stabilisante, dans une atmosphère comprenant au moins 10% en volume d'oxygène. En pratique, la solution est stockée dans un réservoir d'échantillonnage hermétique. Le réservoir est ensuite transporté jusque dans une boite à gant où on effectue la mesure de viscosité sous atmosphère inerte.

On obtient ainsi des valeurs reproductibles. Cependant, les boîtes à gants sont volumineuses, onéreuses et ne sont pas sans poser des problèmes logistiques et de maintenance sur des plateformes pétrolières, notamment. En outre, il est nécessaire de prélever l'échantillon pour ensuite le transporter jusqu'à la boite à gant. Aussi, le risque de contact de la solution de polymère avec l'oxygène au moment du prélèvement reste un inconvénient majeur.

Bien que ce procédé ait donné des améliorations significatives lors des analyses ultérieures de viscosité de ladite solution, le niveau de qualité et de fiabilité des mesures de viscosité peut encore être amélioré.

Une solution alternative est celle de mesurer la viscosité de la solution aqueuse de polymère dans une boîte à gants.

Le problème que se propose donc de résoudre l'invention est celui de mettre au point un dispositif de mesure de viscosité qui soit aussi fiable qu'une boite à gant et qui garantisse l'absence de contamination de la solution de polymère par l'oxygène, au moment de son prélèvement.

US 4 630 468 A divulgue un viscosimètre capable de réaliser des mesures rhéologiques sur des liquides dans des conditions de forte température et pression, mais pas sur une solution aqueuse de polymère hydrosoluble dont la viscosité n'est pas stable en milieu aérobie.

RENUKA N. MANICHAND ET AL: "Effective Propagation of HPAM Solutions Through the Tambaredjo Reservoir During a Polymer Flood", SPE PRODUCTION & OPERATIONS : AN OFFICIAL PUBLICATION OF THE SOCIETY OF PETROLEUM ENGINEERS, vol. 28, no. 04, 1 novembre 2013 (2013-11-01), pages 358-368, divulguent un dispositif de mesure de la viscosité d'une solution aqueuse de polymère hydrosoluble dont la viscosité n'est pas stable en milieu aérobie selon le préambule de la revendication 1.

US 3 680 362 A et US 2008/127718 A1 décrivent tous deux des viscosimètres à capillaire. US 5 587 522 A décrit un dispositif pour mesurer la viscosité d'une huile, mais pas d'inertage au sens de l'invention.

### DESCRIPTION DE L'INVENTION

Afin de pouvoir disposer de mesures fiables de la viscosité de solutions aqueuses de polymères hydrosolubles avec un dispositif simple, transportable facilement et peu couteux, la Demanderesse a mis au point un dispositif de mesure de viscosité sous atmosphère inerte de solutions dont la viscosité n'est pas stable lors de la mesure de la viscosité en milieu aérobie.

Le dispositif de mesure de viscosité sous atmosphère inerte comprend un viscosimètre et son porte échantillon, caractérisé en ce que seul le porte échantillon est partiellement ou totalement inerté.

Un autre aspect de l'invention est une méthode de mesure sous atmosphère inerte de la viscosité d'une solution sensible à la dégradation en milieu aérobie avec le dispositif préalablement mentionné.

Enfin l'invention concerne aussi l'utilisation du dispositif préalablement décrit pour déterminer la viscosité d'une solution aqueuse de polymère hydrosoluble, ladite solution provenant du circuit principal d'une installation de récupération de pétrole.

Plus précisément, l'invention a pour objet un dispositif de mesure de la viscosité d'une solution dont la viscosité n'est pas stable en milieu aérobie. Ce dispositif est destiné à être connecté à une source contenant la solution, et comprend :
- un viscosimètre comprenant une tête de viscosimètre d'où émerge un module ;
- un récipient dans lequel plonge le module,
- un moyen de purge.

Le dispositif se caractérise en ce qu'il comprend en outre des moyens de mise en contact de l'intérieur du récipient avec un gaz inerte, et en ce que le récipient présente des moyens d'amenée de la solution destinés à être connectés à la source.

Dans la suite de la description, le dispositif de l'invention est plus particulièrement décrit en relation avec la mesure de la viscosité d'une solution de polymère mise en œuvre dans une installation pour la récupération du pétrole. Néanmoins et comme déjà dit, le dispositif de l'invention peut être utilisé pour toute solution dont la viscosité n'est pas stable en milieu aérobie.

En d'autres termes, l'invention consiste à connecter le récipient contenant la solution de polymère à analyser soit sur le circuit principal d'où est prélevée ladite solution, soit à un réservoir d'échantillonnage contenant la solution à analyser du type de celui décrit dans le document FR 2977630. La solution de polymère est ainsi mise directement au contact d'une atmosphère inerte à proximité de l'installation. De la sorte, la solution à analyser n'est jamais au contact de l'oxygène ambiant et les conditions de mesure de la viscosité se trouvent optimisées.

Dans la suite de la description et dans les revendications, par l'expression « tête du viscosimètre » on désigne l'ensemble renfermant les moyens animant le module en rotation, de même qu'au moins un dispositif d'affichage (pour la valeur des viscosités, cadran à aiguille ou digital) ainsi qu'un dispositif de contrôle de l'appareil (mise en route, réglages).

De même, par l'expression « récupération du pétrole », on désigne un procédé de récupération assisté du pétrole ou un procédé de fracturation hydraulique.

Par l'expression « circuit principal », il faut entendre l'ensemble qui comprend des canalisations, mais qui peut également comprendre des cuves de stockage ou de maturation, dans lesquelles circule la solution viscosifiée. Le prélèvement peut s'effectuer sur les canalisations ou sur les cuves de stockage ou de maturation où la circulation du polymère est beaucoup plus lente.

Selon une première caractéristique, les moyens d'amenée de la solution se présentent sous la forme d'un tube débouchant dans une des parois du récipient, avantageusement, au fond du récipient.

Dans un premier mode de réalisation, seul l'intérieur du récipient est en contact avec un gaz inerte. Dans ce cas :
- le récipient est fermé avec un couvercle dont le centre est traversé par le module,
- les moyens de mise en contact de l'intérieur du récipient avec un gaz inerte se présentent sous la forme d'un tube alimenté en gaz inerte connecté directement à l'une des parois du récipient au-dessus du niveau de la solution,
- le moyen de purge est agencé dans la paroi latérale du récipient.

Avantageusement, le point de jonction entre le module et le centre du couvercle est étanche de sorte à ne pas laisser échapper le gaz inerte. Tel est le cas lorsqu'on procède à un inertage statique.

Dans un second mode de réalisation, le récipient est ouvert et on inerte, en plus de l'intérieur du récipient, le volume séparant la tête du viscosimètre du récipient.

Dans ce cas, les moyens de mise en contact de l'intérieur du récipient avec un gaz inerte se présentent sous la forme d'un moyen de fermeture étanche séparant la tête du viscosimètre de l'ouverture du récipient en combinaison avec un moyen d'alimentation en gaz inerte, du volume séparant la tête du viscosimètre du niveau de la solution.

Avantageusement, les moyens de fermeture étanche se présentent sous la forme d'un joint circulaire ou d'un manchon.

De préférence, le moyen de purge est agencé dans la paroi latérale du récipient.

Dans un troisième mode de réalisation, le récipient est ouvert et on inclut l'ensemble constitué par le récipient et le module dans une chambre d'inertage, à l'exception de la tête du viscosimètre. La chambre d'inertage est ainsi alimentée en gaz inerte et sa paroi est traversée par le tube amenant la solution.

Plus précisément, dans ce cas, les moyens de mise en contact de l'intérieur du récipient avec un gaz inerte se présentent sous la forme d'une enceinte étanche à l'intérieur de laquelle sont positionnés le seul module constitutif du viscosimètre et le récipient, et dans laquelle débouchent :
- un tuyau alimenté en gaz inerte,
- les moyens d'amenée de la solution destinés à être connectés à la source,
- le moyen de purge.

Avantageusement, l'enceinte présente des moyens de solidarisation étanche à la base de la tête du viscosimètre.

Dans un mode de réalisation particulier, l'enceinte a la forme d'un parallélépipède, dont la longueur est comprise entre 30 et 60 cm, la largeur est comprise entre 30 et 60 cm et la hauteur est comprise entre 30 et 50 cm.

Pour installer le porte échantillon du viscosimètre et aussi pouvoir nettoyer l'enceinte en dehors des périodes d'inertage, l'enceinte est dotée d'une trappe d'accès pour les mains de l'opérateur.

Dans tous les modes de réalisation, le moyen de purge est préférentiellement une soupape de sécurité ou tarée, une garde hydraulique ou une vanne de fuite.

Quel que soit le mode de réalisation du dispositif de l'invention, optionnellement, des moyens d'étanchéification sont utilisés pour tout orifice (alimentation en gaz inerte, purge, alimentation en solution polymérique, trappe, tête du viscosimètre) lors de la mise en place sur la chambre d'inertage des alimentations (gaz, polymère), du moyen de purge ou optionnellement lors de l'extériorisation de la tête du viscosimètre ou la fermeture de la trappe.

Préférentiellement, ces moyens d'étanchéification sont des joints placés sur le contour de chaque orifice.

Quel que soit le mode de réalisation du dispositif de l'invention, optionnellement, le récipient dispose d'un moyen d'évacuation de la solution polymérique agencé dans sa paroi en dessous du niveau maximal de la solution de polymère lorsque celle-ci est présente dans le récipient. Un syphon ou une vanne peuvent être utilisés comme moyen d'évacuation. Ce moyen d'évacuation est conçu afin d'éviter une rétrodiffusion d'oxygène dans la solution polymérique.

La présente invention consiste aussi en une méthode d'analyse, sous atmosphère inerte, de la viscosité d'une solution dont la viscosité n'est pas stable en milieu aérobie. Cette méthode se caractérise en ce qu'elle met en œuvre le dispositif préalablement décrit et comprend les étapes suivantes :
a) Inerter l'intérieur au moins du récipient ;
b) Injecter la solution à analyser dans le récipient ;
c) Mesurer la viscosité de la solution à analyser

La solution dont la viscosité n'est pas stable en milieu aérobie peut être aqueuse, organique ou un mélange des deux.

La viscosité mesurée est une viscosité dynamique. Préférentiellement, cette viscosité dynamique est déterminée avec un viscosimètre Brookfield.

La température de la solution à analyser est optionnellement régulée au sein du porte échantillon au moyen d'un liquide caloporteur de température prédéfinie circulant dans la double paroi du porte échantillon.

Le gaz inerte est choisi parmi l'azote, le dioxyde de carbone ou des gaz rares tels que le néon ou l'hélium. Préférentiellement le gaz inerte est de l'azote.

Préférentiellement la teneur en oxygène de l'atmosphère inerte dans laquelle est partiellement ou totalement inerté le porte échantillon peut être mesurée.

Préférentiellement, la teneur en oxygène de l'atmosphère est mesurée au moyen d'une sonde entre l'étape a) et l'étape b) de la méthode d'analyse préalablement décrite.

La mise sous atmosphère inerte est effectuée préférentiellement par des cycles de remplissages par du gaz inerte et de purge du volume à inerter ou par un balayage continu avec du gaz inerte du volume à inerter, l'excès de gaz inerte partant par une soupape tarée ou une vanne de fuite.

Optionnellement, la mesure de viscosité s'effectue de manière continue grâce un débit contrôlé de la solution polymérique et la présence d'un moyen d'évacuation de la solution polymérique agencé dans la paroi du récipient au-dessous du niveau maximal de la solution polymérique lorsque celle-ci est présente dans le récipient.

Enfin, l'invention concerne aussi l'utilisation du dispositif préalablement décrit pour mesurer la viscosité d'une solution aqueuse de polymère hydrosoluble, ladite solution provenant du circuit principal d'une installation de récupération de pétrole.

Dans un premier mode de réalisation, le dispositif de l'invention est connecté directement au circuit principal de l'installation dans lequel circule la solution de polymère dont on souhaite mesurer la viscosité. Le circuit principal est ainsi utilisé comme source de polymère.

La mesure de viscosité sera dynamique et préférentiellement mesurée avec un appareil Brookfield.

La solution aqueuse de polymère hydrosoluble est préférentiellement stabilisée avec une solution stabilisante comprenant au moins un agent stabilisant choisi parmi les agents désoxygénant, les agents précipitants, les capteurs de radicaux, les agents complexant, les agents absorbants d'H₂S et les agents sacrificiels. De préférence, la solution stabilisante contient au moins trois agents stabilisants choisis parmi les agents désoxygénant, les agents précipitants, les capteurs de radicaux, les agents complexant, les agents absorbants d'H2S et les agents sacrificiels.

De tels agents stabilisants, bien connus de l'homme de métier, seront choisis classiquement en fonction des conditions rencontrées lors de l'utilisation du polymère, comme cela est présenté dans le tableau ci-après.

| Conditions d'utilisation du polymère | | Stabilisant | Rôle du stabilisant |
|---|---|---|---|
| Limitation de dégradation r adicalaire polymère par : | Action sur la source engendrant ou accélérant la formation des radicaux | Agent désoxygénant | Elimine de l'oxygène résiduel |
| | | Agent précipitant | Complexe et Précipite les ions métalliques pour en diminuer leur activité |
| | | Agent absorbant d'H₂S | Capte l'H₂S présent |
| | Action de captage des radicaux libres formés avant qu'ils n'attaquent le polymère | Agent capteur de radicaux | Forme des radicaux plus stable non dégradants vis-à-vis de la chaine polymérique |
| | | Agent sacrificiel | Réagit très rapidement avec les radicaux formés pour les absorber |
| Limitation de dégradation thermique polymère | Par une action de complexation des ions ayant la capacité d'interagir avec les groupes anioniques du polymère pour en réduire sa viscosité voire de le précipiter | Agent complexant | Complexe les ions métalliques de valence supérieure ou égale à deux au sens large (métaux de transition, alcalins, alcalino terreux) |

Dans un de mode de réalisation particulier, la solution de polymère hydrosoluble est stabilisée au moyen d'un dispositif de prélèvement destiné à être connecté au circuit principal dans lequel circule la solution aqueuse.

Dans ces conditions, le dispositif de l'invention est connecté à la sortie de la canalisation de sortie du réservoir d'échantillonnage d'un dispositif de prélèvement, ce dernier étant lui-même connecté au circuit principal de l'installation, ledit dispositif de prélèvement comprenant :
▪ Un premier réservoir, nommé réservoir d'échantillonnage, destiné à contenir l'échantillon prélevé, comportant :
   - Une entrée pour la solution aqueuse de polymère à prélever, et une canalisation de prélèvement reliée à cette entrée, ladite canalisation de prélèvement étant équipée d'un obturateur de prélèvement non cisaillant et étant destinée à être connectée à au circuit principal et
   - Une sortie et une canalisation de sortie équipée d'un obturateur de sortie et reliée à la sortie
▪ Un deuxième réservoir, nommé réservoir de traitement, destiné à contenir une solution stabilisante, comportant une sortie pour la solution stabilisante, une canalisation de connexion reliée à la sortie pour la solution stabilisante et équipée d'un obturateur de traitement et assurant, au moins pour partie, la connexion entre le réservoir de traitement et le réservoir d'échantillonnage.

Le réservoir d'échantillonnage est isolé de manière hermétique lorsque l'obturateur de prélèvement, l'obturateur de sortie et l'obturateur de traitement, et, éventuellement d'autres obturateurs qui seraient présents pour assurer une communication du réservoir d'échantillonnage avec l'extérieur, sont fermés.

L'échantillon stabilisé ainsi obtenu peut être directement analysé en suivant les étapes suivantes de a) à c) de la méthode revendiquée

Selon une alternative, le dispositif de l'invention est connecté à la sortie de la canalisation de sortie du réservoir d'échantillonnage, préalablement désolidarisé du dispositif de prélèvement.

La dispositif selon l'invention est adapté pour l'analyse de la viscosité sous atmosphère inerte de solutions aqueuses de tout type de polymères hydrosolubles, connus pour avoir un rôle fonctionnel et/ou classiquement utilisés dans les procédés de récupération du pétrole ou de fracturation hydraulique. Des prélèvements pourront être effectués avant l'entrée de la solution aqueuse de polymère dans le puits de pétrole, également nommé réservoir, ou avant son injection dans la roche. Il sera ainsi possible de déterminer la qualité du polymère au point de prélèvement et éventuellement prévoir, avant son injection, un traitement adapté avec certains additifs stabilisants, un ajustement du dosage ou un changement des paramètres d'injection. Il est également possible d'utiliser le dispositif de l'invention pour mesurer la viscosité en sortie d'un réservoir de pétrole ou de la roche, afin de vérifier si le polymère a subi des dégradations dans les formations souterraines. Des prélèvements et contrôles avec le dispositif de l'invention en entrée et en sortie du réservoir de pétrole ou de la roche peuvent également être prévus.

En particulier, le polymère hydrosoluble présent dans la solution aqueuse à prélever peut, notamment, être tout type de polymères organiques synthétiques ou naturels solubles dans l'eau. Notamment, les polymères hydrosolubles décrits par la demanderesse dans la demande de brevet FR 0953258 pourront être présents dans la solution aqueuse injectée. Citons par exemple les polymères à base d'acrylamide. Le plus souvent, le polymère hydrosoluble utilisé présente un poids moléculaire supérieur ou égal à 1 million g/mol, notamment appartenant à la gamme allant de 1 à 35 millions g/mol. On préférera des polymères à base d'acrylamide, et notamment ceux dans lesquels l'acrylamide représente, de préférence, au moins 10% en moles. En particulier, la solution aqueuse à prélever pourra contenir au moins un copolymère d'acrylamide avec au choix l'acide acrylique, l'acide 2-acrylamido-2-méthylpropane sulfonique ou la N-vinyl pyrrolidone. Il est possible que la solution aqueuse prélevée contienne plusieurs polymères hydrosolubles.

De par la sélection de monomères et des différents additifs de polymérisation, le polymère présent dans la solution aqueuse prélevée présentera une structure linéaire, ramifiée, réticulée ou une architecture peigne (en anglais « comb polymer »), étoilée (en anglais « star polymer »).

Le plus souvent, la solution aqueuse de polymère sera réalisée dans une saumure. Optionnellement, la solution aqueuse de polymère peut contenir un agent alcalin, par exemple choisi parmi les hydroxydes, les carbonates et les bicarbonates de métal alcalin ou d'ammonium, tel que le carbonate de sodium. La solution aqueuse de polymère peut également contenir au moins un agent tensioactif.

La concentration en polymère dans la solution aqueuse, et en particulier dans la saumure est, en général, supérieure à 50 ppm, et, le plus souvent, comprise entre 100 et 30000 ppm.

### EXEMPLES DE REALISATION

L'invention ressort bien des exemples à l'appui des figures annexées.
La figure 1 est une représentation schématique du dispositif de l'invention selon un premier mode de réalisation.
La figure 2 est une représentation schématique du dispositif de l'invention selon un second mode de réalisation.
La figure 3 est une représentation schématique du dispositif de l'invention selon un troisième mode de réalisation.
La figure 4 est une représentation schématique du dispositif de l'invention selon un quatrième mode de réalisation.

### Exemple 1 : réalisation du dispositif

Selon l'invention, le dispositif comprend :
- un viscosimètre comprenant une tête de viscosimètre (1) d'où émerge un module (5) ;
- un récipient ou porte échantillon (4) dans lequel plonge le module (5).

Selon une caractéristique essentielle, le récipient est pourvu dans son fond d'un orifice (13) dans lequel débouche un tuyau (12) d'alimentation de solution, le tuyau étant destiné à être connecté par son autre extrémité à une source de solution dont on souhaite doser la viscosité.

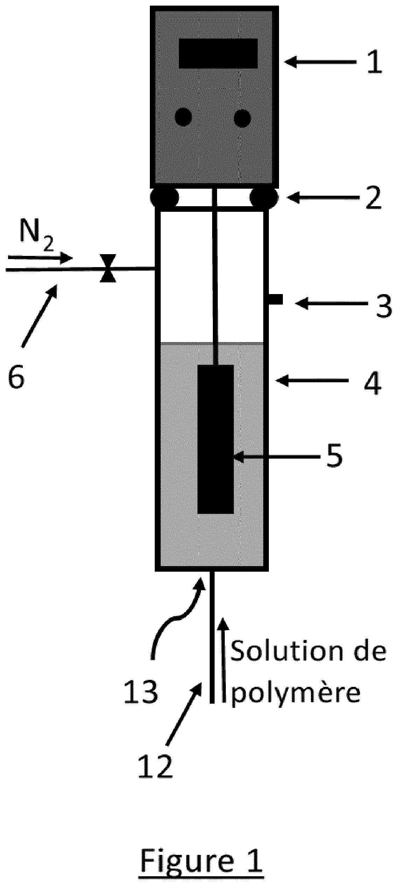

Dans un premier mode de réalisation (Figure 1), le porte échantillon est partiellement inerté. Dans ce cas, le dispositif comprend un porte échantillon (4) dont la partie supérieure vient au contact de la tête du viscosimètre (1) par le biais d'un joint (2) tout en gardant le module (5) du viscosimètre immergé dans la solution à analyser et sans contact avec le fond du porte échantillon.

Comme déjà dit, la tête du viscosimètre comprend au moins un dispositif d'affichage (pour la valeur des viscosités, cadran à aiguille ou digital) et un dispositif de contrôle de l'appareil (mise en route, réglages), de même qu'un moteur animant en rotation le module. Pour ce mode de réalisation, afin que le volume interne du porte échantillon soit suffisamment fermé pour garantir une étanchéité au gaz, on positionne un joint circulaire (2) entre la tête du viscosimètre et l'ouverture du porte échantillon afin que le volume total comprenant le volume interne du porte échantillon et le volume interne du joint ne forme d'un seul volume fermé et étanche au gaz.

Ainsi, le volume interne du porte échantillon surmonté d'un joint, peut être rempli de gaz inerte (6) grâce à un orifice agencé sur la paroi latérale du porte échantillon pour recevoir l'arrivée de gaz inerte. Le récipient peut être purgé grâce à un moyen de purge (3) agencé également sur la paroi latérale du récipient.

L'orifice pour l'arrivée d'azote et le moyen de purge sont placés au-dessus du niveau maximum occupé par la solution à analyser dans le porte échantillon.

Ainsi, le moyen de purge permet de purger le récipient en retirant le gaz inerte sans que la solution à analyser puisse-t-être évacuée du récipient.

Le moyen de purge est préférentiellement une soupape de sécurité ou tarée, une garde hydraulique ou une vanne de fuite.

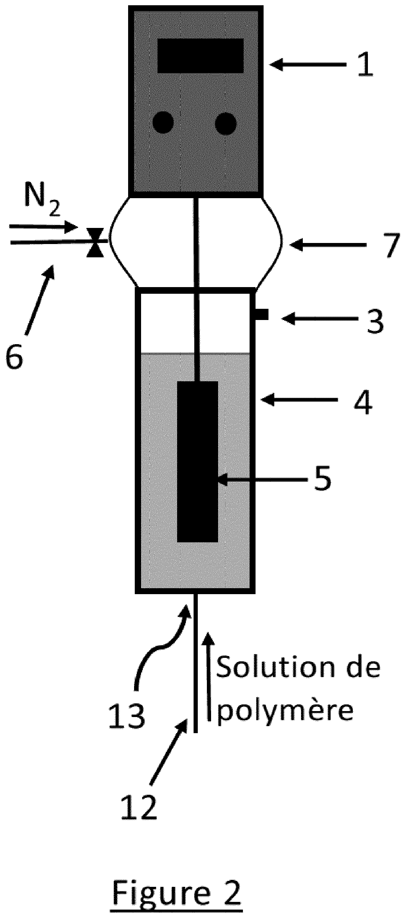

Dans un second mode de réalisation (Figure 2), le porte échantillon (4) est partiellement inerté et le dispositif comprend un moyen de jonction (7), souple ou rigide, entre la tête du viscosimètre (1) et le haut du porte échantillon.

Ainsi, le volume total comprenant le volume interne du porte échantillon et le volume interne du moyen de jonction ne forme qu'un seul volume fermé et étanche au gaz.

Préférentiellement, le moyen de jonction est un cylindre ou un manchon pouvant se fixer de façon étanche grâce à son élasticité sur la base de la tête du viscosimètre et sur l'ouverture du porte échantillon.

Le volume fermé et étanche comprenant le volume interne du porte échantillon et le volume interne du moyen de jonction peut être rempli de gaz inerte grâce à un orifice pour recevoir l'arrivée de gaz inerte (6) et peut être purgé grâce à un moyen de purge (3). Comme le montre la figure 2, l'orifice d'alimentation en gaz inerte est agencé directement dans le manchon alors que l'orifice de purge est agencé dans la paroi latérale du récipient.

L'orifice pour l'arrivée de gaz inerte et le moyen de purge sont placés au-dessus du niveau maximum occupé par la solution de polymère hydrosoluble dans le porte échantillon. Dans un mode de réalisation alternatif, les deux alimentations peuvent être situées sur le moyen de jonction ou sur le porte échantillon.

Préférentiellement, le moyen de purge est une soupape de sécurité, une garde hydraulique ou une vanne.

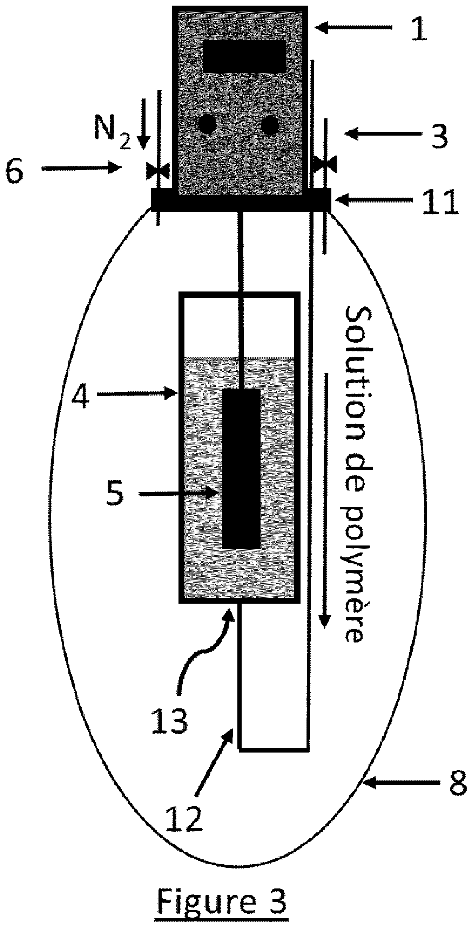

Dans un troisième mode de réalisation (Figure 3), le porte échantillon (4) est totalement inerté. En pratique, le porte échantillon (4) est placé au sein d'une chambre ou enceinte d'inertage souple (8), au moins partiellement transparente. L'enceinte est rendue solidaire de la base de la tête du viscosimètre au moyen d'une pièce de jonction étanche (11) sous la forme d'un anneau fixé à la périphérie de la tête. L'anneau (11) est pourvu de différents ajourements permettant le passage de l'alimentation en gaz inerte (6), de l'alimentation en solution de polymère (3) et permettant le positionnement de la purge (3).

L'ouverture de la chambre d'inertage est fixée sur la base de la tête du viscosimètre par le biais de la pièce de jonction étanche (11) de telle sorte que le volume au sein de l'enceinte et sous la face inférieure de la tête du viscosimètre est un volume fermé et étanche au gaz. Ce volume peut être rempli de gaz inerte par une ouverture (6) ménagée à travers la jonction étanche (11) et peut être purgé grâce à un moyen de purge (3), également ménagé dans la jonction étanche (11). Le moyen de purge (3) est préférentiellement une vanne.

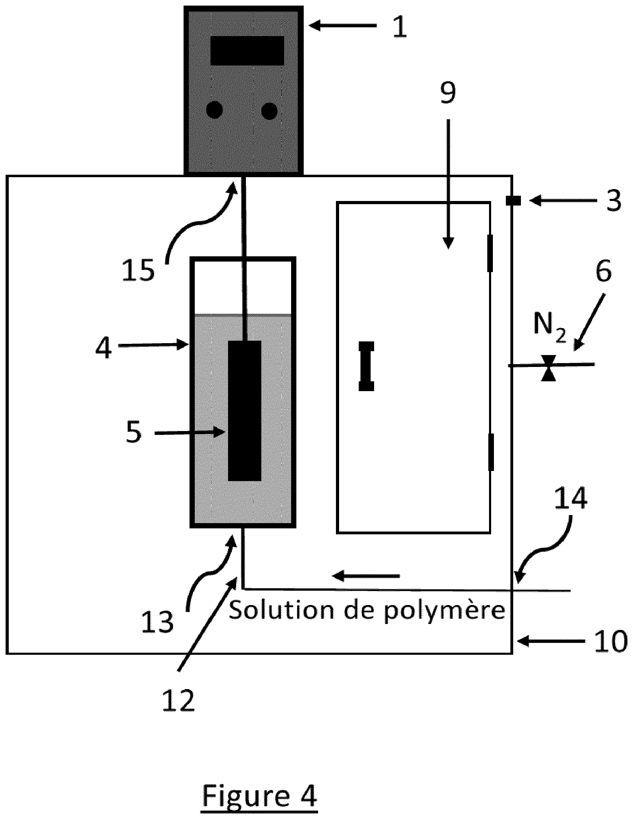

Dans un quatrième mode de réalisation (Figure 4), le porte échantillon (4) et le seul module (5) du viscosimètre sont totalement inertés en étant placés dans une chambre d'inertage souple ou rigide (10) comprenant :
- Un moyen d'introduire les mains d'un opérateur dans l'enceinte en dehors des périodes d'inertage ; en l'espèce, une trappe d'accès (9)
- Un orifice (15) permettant le passage du module de sorte à ce que la tête du viscosimètre 1 se trouve à l'extérieur de la chambre d'inertage ;
- Un orifice (6) pour permettre d'alimenter la chambre d'inertage en gaz inerte ;
- Un moyen de purge (3) de la chambre d'inertage ; préférentiellement une soupape de sécurité ou une garde hydraulique.
- Un orifice (14) pour permettre l'alimentation du porte échantillon en solution aqueuse à analyser.

La chambre d'inertage ou enceinte peut être rigide ou souple. Préférentiellement, la chambre d'inertage est rigide.

La forme et les dimensions de la chambre d'inertage sont choisies de telle sorte que le porte échantillon du viscosimètre puisse être introduit dans l'enceinte de la chambre d'inertage tout en gardant la tête du viscosimètre à l'extérieur. De préférence, la chambre d'inertage a la forme d'un parallépipède dont la longueur est comprise entre 30 et 60 cm, la largeur est comprise entre 30 et 60 cm et la hauteur est comprise entre 30 et 50 cm.

Les parois de la chambre d'inertage peuvent être, partiellement ou intégralement, transparentes ou opaques. De préférence, au moins une des faces de la chambre d'inertage sera au moins partiellement transparente.

Pour installer le porte échantillon du viscosimètre et aussi pouvoir le nettoyer en dehors des périodes d'inertage, la chambre d'inertage est dotée d'une trappe (9). Aucune manipulation manuelle sous atmosphère inerte au sein de la chambre d'inertage n'est requise. La présence de gants solidaires des parois de la chambre d'inertage est donc inutile.

### Exemples 2 : mesure de viscosité

Exemple A : La saumure (composition : 4,5 g/L NaCl ; 0,15 g/L CaCl₂, 2H₂O) est faite en boîte à gants (modèle GP concept T4 Longueur 2,70 m / Hauteur 1,85 m / Profondeur 1,30 m) à l'aide d'eau deionisée désoxygénée. Une solution mère à 5000 ppm du copolymère A : acrylamide/acrylate de sodium 70/30 mol% (18 Millions Daltons) est préparée avant d'être diluée à 1000 ppm avec la saumure. La viscosité de la solution est mesurée.

Exemple B : La viscosité de la solution de l'exemple A est mesurée en boite à gants après l'ajout de 10 ppm de Fer II.

La solution de polymère de l'exemple B préparée est divisée en quatre fractions.

Exemple C : une fraction de la solution préparée dans l'exemple B est sortie de la boîte à gant et est exposée à l'air. La viscosité résiduelle est mesurée.

Exemple D : La seconde fraction de la solution de l'exemple B est transférée dans une cellule en inox en conservant l'anaérobie de la solution. La cellule en inox est pressurisée à hauteur de 3-5 bar avec de l'azote. La cellule en inox est similaire au matériel utilisé pour l'échantillonnage de solution en application sur terrain. La cellule est connectée au montage inerté correspondant à la figure 4, la teneur en oxygène étant contrôlée par une sonde Presens. La solution de polymère est transférée dans le module de mesure du viscosimètre et la viscosité est mesurée.

Exemple E : Cinq pour cent d'un stabilisant de type capteur de radicaux est ajoutée à la troisième fraction de la solution de l'exemple B, la viscosité est mesurée en boite à gants.

Exemple F : La fraction de l'exemple E est sortie de la boîte à gant et est exposée à l'air. La viscosité résiduelle est mesurée.

Exemple G : Cinq pour cent du stabilisant de type capteur de radicaux est ajoutée à la quatrième fraction de la solution de l'exemple B, la viscosité est mesurée. Cette fraction est transférée dans une cellule en inox en conservant l'anaérobie de la solution. La cellule en inox est pressurisée à hauteur de 3-5 bar avec de l'azote. La cellule en inox est similaire au matériel utilisé pour l'échantillonnage de solution en application sur terrain. La cellule est connectée au montage inerté correspondant à la figure 4, la teneur en oxygène étant contrôlée par une sonde Presens. La solution de polymère est transférée dans le module de mesure du viscosimètre et la viscosité est mesurée.

| Exemple | Composition | Conditions de mesure | Teneur en oxygène | Viscosité (cp) |
|---|---|---|---|---|
| A | 1000 ppm Polymer A | Boîte à gants | 5 ppb | 30 |
| B | 1000 ppm Polymer A + 10 ppm Fe II | Boîte à gants | 5 ppb | 31 |
| C | 1000 ppm Polymer A + 10 ppm FeII | Hors boîte à gants | Condition aérobie | 5 |
| D | 1000 ppm Polymer A + 10 ppm FeII | Montage inerté de la figure 4 | 3 ppb | 26 |
| E | 1000 ppm Polymer A + 10 ppm FeII + Stabilisant | Boîte à gants | 5 ppb | 31 |
| F | 1000 ppm Polymer A + 10 ppm FeII + Stabilisant | Hors boîte à gants | Condition aérobie | 22 |
| G | 1000 ppm Polymer A + 10 ppm FeII + Stabilisant | Montage inerté de la figure 4 | 4 ppb | 30 |

Ces exemples mettent en évidence que le dispositif de mesure, sous atmosphère inerte, de l'invention, d'un polymère sensible à la dégradation en milieu aérobie (exemples C et F) permet des mesures fiables avec peu de dégradation du polymère (comparaison exemples D/A et G/E) et ceci que la solution de polymère soit préalablement stabilisée ou non avant la mesure de viscosité.

## Revendications

1. Dispositif de mesure de la viscosité d'une solution aqueuse de polymère hydrosoluble dont la viscosité n'est pas stable en milieu aérobie, ledit dispositif étant destiné à être connecté à une source contenant la solution et comprenant :
- un viscosimètre comprenant une tête de viscosimètre (1) d'où émerge un module (5), la tête de viscosimètre désignant l'ensemble renfermant les moyens animant le module en rotation, de même qu'au moins un dispositif d'affichage ainsi qu'un dispositif de contrôle de l'appareil ;
- un récipient (4) dans lequel plonge le module (5),
**caractérisé en ce qu'**il comprend en outre des moyens de mise en contact de l'intérieur du récipient avec un gaz inerte, un moyen de purge de gaz inerte (3), et **en ce que** le récipient présente des moyens d'amenée de la solution destinés à être connectés à la source.

2. Dispositif selon la revendication 1, **caractérisé en ce que** les moyens d'amenée de la solution se présentent sous la forme d'un tube débouchant dans une des parois du récipient, avantageusement le fond du récipient.

3. Dispositif selon l'une des revendications précédentes, **caractérisé en ce que** les moyens de mise en contact de l'intérieur du récipient avec un gaz inerte se présentent sous la forme d'un moyen de fermeture étanche séparant la tête du viscosimètre de l'ouverture du récipient en combinaison avec un moyen d'alimentation en gaz inerte, du volume séparant la tête du viscosimètre du niveau de la solution.

4. Dispositif selon la revendication 3, **caractérisé en ce que** les moyens de fermeture étanche se présentent sous la forme d'un joint circulaire ou d'un manchon.

5. Dispositif selon l'une des revendications 1 à 4, **caractérisé en ce que** le moyen de purge de gaz inerte est agencé dans la paroi latérale du récipient.

6. Dispositif selon l'une des revendications 1 ou 2, **caractérisé en ce que** les moyens de mise en contact de l'intérieur du récipient avec un gaz inerte se présentent sous la forme d'une enceinte étanche à l'intérieur de laquelle sont positionnés le module constitutif du viscosimètre et le récipient, et dans laquelle débouchent :
- un tuyau alimenté en gaz inerte,
- les moyens d'amenée de la solution destinés à être connectés à la source,
- le moyen de purge de gaz inerte.

7. Dispositif selon la revendication 6, **caractérisé en ce que** l'enceinte est dotée d'une trappe d'accès pour les mains de l'opérateur.

8. Méthode d'analyse, sous atmosphère inerte, de la viscosité d'une solution dont la viscosité n'est pas stable en milieu aérobie, **caractérisée en ce qu'**elle met en œuvre le dispositif objet de l'une des revendications 1 à 7 et comprend les étapes suivantes :
a) Inerter l'intérieur au moins du récipient (4) ;
b) Injecter la solution à analyser dans le récipient (4) ;
c) Mesurer la viscosité de la solution à analyser.

9. Méthode d'analyse selon la revendication 8 **caractérisée en ce qu'**on mesure la teneur en oxygène de l'atmosphère inerte au moyen d'une sonde entre l'étape a) et l'étape b).

10. Utilisation du dispositif objet de l'une des revendications 1 à 7 pour mesurer la viscosité d'une solution aqueuse de polymère hydrosoluble, ladite solution provenant du circuit principal d'une installation de récupération de pétrole.

11. Utilisation du dispositif selon la revendication 10, **caractérisé en ce qu'**il est connecté directement au circuit principal de l'installation dans lequel circule la solution de polymère dont on souhaite mesurer la viscosité.

12. Utilisation du dispositif selon la revendication 10, **caractérisée en ce qu'**il est connecté à la sortie de la canalisation de sortie d'un réservoir d'échantillonnage d'un dispositif de prélèvement de solution de polymère, ce dernier étant lui-même connecté au circuit principal de l'installation, ledit dispositif de prélèvement comprenant :
▪ Un premier réservoir, nommé réservoir d'échantillonnage, destiné à contenir l'échantillon prélevé, comportant :
- Une entrée pour la solution aqueuse de polymère à prélever, et une canalisation de prélèvement reliée à cette entrée, ladite canalisation de prélèvement étant équipée d'un obturateur de prélèvement non cisaillant et étant destinée à être connectée au circuit principal et
- Une sortie et une canalisation de sortie équipée d'un obturateur de sortie et reliée à la sortie
▪ Un deuxième réservoir, nommé réservoir de traitement, destiné à contenir une solution stabilisante, comportant une sortie pour la solution stabilisante, une canalisation de connexion reliée à la sortie pour la solution stabilisante et équipée d'un obturateur de traitement et assurant, au moins pour partie, la connexion entre le réservoir de traitement et le réservoir d'échantillonnage.

13. Utilisation du dispositif selon la revendication 12, **caractérisée en ce qu'**il est connecté à la sortie de la canalisation de sortie du réservoir d'échantillonnage, préalablement désolidarisé du dispositif de prélèvement.

## Patentansprüche

1. Vorrichtung zum Messen der Viskosität einer wässrigen Lösung, eines wasserlöslichen Polymers, dessen Viskosität unter aeroben Bedingungen instabil ist, wobei die Vorrichtung an eine Quelle angeschlossen werden soll, die die Lösung enthält, und sie umfasst:
- einen Viskosimeter (1) mit einem Viskosimeterkopf, aus dem ein Modul (5) herausragt; der Viskosimeterkopf bezeichnet dabei die Einheit, die die Mittel enthält, mit denen das Modul in Drehung versetzt wird, ebenso wie mindestens eine Anzeigevorrichtung sowie eine Steuervorrichtung des Gerätes;
- einen Behälter (4), in den das Modul (5) eingetaucht ist,
**dadurch gekennzeichnet, dass** sie außerdem Vorrichtungen enthält, um das Innere des Behälters mit einem Inertgas in Kontakt zu bringen, eine Ablassvorrichtung für Inertgas (3), und dass der Behälter eine Einlassvorrichtung für die Lösung aufweist, die mit der Quelle verbunden werden soll.

2. Vorrichtung nach Anspruch 1, **dadurch gekennzeichnet, dass** die Einlassvorrichtung der Lösung die Form eines Rohrs hat, das in einer der Wände des Behälters mündet, vorteilhafterweise der Rückwand des Behälters.

3. Vorrichtung nach einem der vorangehenden Ansprüche, **dadurch gekennzeichnet, dass** die Herstellung des Kontaktes zwischen dem Behälterinneren und einem Inertgas, in der Form eines dichten Verschließens erfolgt, bei dem der Viskosimeterkopf von der Öffnung des Behälters getrennt wird, kombiniert mit einer Vorrichtung zur Einspeisung von Inertgas, in den Raum, der den Viskosimeterkopf vom Pegel der Lösung trennt.

4. Vorrichtung nach Anspruch 3, **dadurch gekennzeichnet, dass** die Vorrichtungen zum dichten Verschließen die Form einer Ringdichtung oder einer Hülse haben.

5. Vorrichtung nach einem der Ansprüche 1 bis 4, **dadurch gekennzeichnet, dass** die Inertgas- Ablassvorrichtung in der Seitenwand des Behälters vorgesehen ist.

6. Vorrichtung nach einem der Ansprüche 1 oder 2, **dadurch gekennzeichnet, dass** die Vorrichtung, um das Behälterinnere mit einem Inertgas in Kontakt zu bringen die Form eines dichten Gehäuses hat, in dessen Inneren das den Viskosimeter bildende Modul angeordnet ist und darin münden:
- ein mit Inertgas gespeistes Rohr,
- die Einlassvorrichtung der Lösung, die mit der Quelle verbunden werden soll,
- die Inertgas- Ablassvorrichtung.

7. Vorrichtung nach Anspruch 6, **dadurch gekennzeichnet, dass** das Gehäuse mit einer Zugangsklappe für die Hände der Bedienperson ausgerüstet ist.

8. Analysemethode unter Inertgastmosphäre der Viskosität einer Lösung, deren Viskosität im aeroben Milieu nicht stabil ist, **dadurch gekennzeichnet, dass** dabei die Vorrichtung, die Gegenstand eines der Ansprüche 1 bis 7 ist, eingesetzt wird und sie die folgenden Schritte umfasst.:
a) Inerte Bedingungen mindestens im Inneren des Behälters (4) herstellen;
b) Zu analysierende Lösung in den Behälter (4) einlassen;
c) Viskosität der zu analysierenden Lösung messen.

9. Analysemethode nach Anspruch 8 **dadurch gekennzeichnet, dass** der Sauerstoffgehalt der inerten Atmosphäre mittels einer Sonde, zwischen Schritt a) und Schritt b) gemessen wird.

10. Einsatz der Vorrichtung, die Gegenstand eines der Ansprüche 1 bis 7 ist, zur Messung der Viskosität einer wässrigen Lösung eines wasserlöslichen Polymers, wobei diese Lösung aus dem Hauptkreislauf einer Erdöl-Rückgewinnungsanganlage stammt.

11. Einsatz der Vorrichtung nach Anspruch10, **dadurch gekennzeichnet, dass** sie direkt mit dem Hauptkreislauf der Anlage verbunden ist, in dem die Polymerlösung zirkuliert, deren Viskosität gemessen werden soll.

12. Einsatz der Vorrichtung nach Anspruch 10, **dadurch gekennzeichnet, dass** sie verbunden ist mit dem Leitungsauslass eines Probetanks einer Probennahmevorrichtung für die Polymerlösung, welche wiederum selbst mit dem Hauptkreislauf der Anlage verbunden ist, diese Probennahmevorrichtung enthält::
- Einen ersten Tank, Probennahmetank genannt, der zur Aufbewahrung der entnommenen Probe dient und der enthält.
- Einen Einlass für die zu entnehmende wässrige Polymerlösung und eine Probennahmeleitung, verbunden mit diesem Einlass, diese Probennahmeleitung ist mit einem nicht scherenden Probennahmeverschluss ausgerüstet und soll mit dem Hauptkreislauf verbunden werden und
- Einen Auslass und eine Auslassleitung, ausgerüstet mit einem Auslassverschluss und mit dem Auslass verbunden.
- Einen zweiten Tank, Behandlungstank genannt, bestimmt zur Aufnahme einer stabilisierenden Lösung, mit einem Auslass für die stabilisierende Lösung, eine Verbindungsleitung, verbunden mit dem Auslass, für die stabilisierende Lösung und ausgerüstet mit einem Behandlungsverschluss, die zumindest zum Teil die Verbindung zwischen dem Behandlungstank und dem Probennahmetank sicherstellt.

13. Einsatz der Vorrichtung nach Anspruch 12, **dadurch gekennzeichnet, dass** sie mit der Auslassleitung des Probennahmetanks verbunden ist, der zuvor von der Probennahmevorrichtung gelöst wurde.

## Claims

1. Device for measuring the viscosity of an aqueous solution of water-soluble polymer whose viscosity is unstable under aerobic conditions, said device being intended to be connected to a source containing the solution and comprising:
- a viscometer comprising a viscometer head (1) wherefrom a module (5) emerges, the viscometer head designating the assembly containing means for rotating the module and at least one display device together with a control mechanism for the device;
- a container (4) into which is the module (5) is immersed,
**characterized in that** it further comprises means for placing the interior of the container in contact with an inert gas, an inert gas purging means (3), and **in that** the container has inlet means for the solution intended to be connected to the source.

2. Device according to claim 1, **characterized in that** the inlet means for the solution is in the form of a tube opening into one of the walls of the container, preferably at the bottom of the container.

3. Device according to one of the preceding claims, **characterized in that** the means of placing the interior of the container in contact with an inert gas is in the form of a sealed closure means separating the viscometer head from the opening of the container in combination with a means of supplying inert gas, to the volume separating the viscometer head from the solution level.

4. Device according to claim 3, **characterized in that** the sealing means is in the form of an o-ring or sleeve.

5. Device according to one of claims 1 to 4, **characterized in that** the inert gas purging means is arranged in the side wall of the container.

6. Device according to one of claims 1 or 2, **characterized in that** the means for placing the interior of the container in contact with an inert gas is in the form of a sealed enclosure within which are located the constituent module of the viscometer and the container, and into which open:
- a pipe supplied with inert gas,
- the inlet means for the solution intended to be connected to the source,
- the inert gas purging means.

7. Device according to claim 6, **characterized in that** the enclosure has an access door for the hands of the operator.

8. Method of analysis, in an inert atmosphere, of the viscosity of a solution whose viscosity is unstable under aerobic conditions, **characterized in that** it implements the device of one of claims 1 to 7 and comprises the following steps:
a) Rendering inert the inside of at least the container (4);
b) Injecting the solution to be analyzed into the container (4);
c) Measuring the viscosity of the solution to be analyzed.

9. Method of analysis according to claim 8, **characterized in that** the oxygen content of the inert atmosphere is measured using a probe between step a) and step b).

10. Use of the device of one of claims 1 to 7 for measuring the viscosity of an aqueous solution of water-soluble polymer, said solution originating from the main circuit of an oil recovery installation.

11. Use of the device according to claim 10, **characterized in that** it is connected directly to the main circuit of the installation within which circulates the polymer solution the viscosity of which is to be measured.

12. Use of the device according to claim 10, **characterized in that** it is connected to the outlet of the discharge pipe of a sampling tank of a polymer solution sampling device, the latter itself being connected to the main circuit of the installation, said sampling device comprising:
▪ A first tank, referred to as the sampling tank, for containing the collected sample, comprising:
- An inlet for the aqueous polymer solution to be sampled, and a sampling line connected to said inlet, said sampling line being provided with a no-shear sampling valve and being designed to be connected to the main circuit and
- An outlet and an outlet pipe equipped with an outlet valve and connected to the output
▪ A second tank, referred to as the treatment tank, for containing a stabilizing solution, having an output for the stabilizing solution, a connecting pipe connected to the outlet for the stabilizing solution and equipped with a treatment valve and allowing, at least in part, for a connection between the treatment tank and the sampling tank.

13. Use of the device according to claim 12, **characterized in that** it is connected to the outlet of the sampling tank discharge pipe, previously detached from the sampling device.
